# EUROPÄISCHE PATENTSCHRIFT

(11) **EP 1 106 862 B1**
(45) Veröffentlichungstag und Bekanntmachung des Hinweises auf die Patenterteilung: **31.03.2004**
(21) Anmeldenummer: 00126336.7
(22) Anmeldetag: 02.12.2000
(51) Int. Cl.: F16F 9/05

(54) **Dichte Befestigung eines Luftfederbalges**
Tight mounting of an air spring bellow
Fixation étanche d'un soufflet roulant

(30) Priorität: 08.12.1999 DE 19959011
(43) Veröffentlichungstag der Anmeldung: 13.06.2001
(73) Patentinhaber: ContiTech Luftfedersysteme GmbH, 30165 Hannover (DE)
(72) Erfinder: Brakmann, Jörn, 30165 Hannover (DE); Wenzel, Detlef, 30890 Barsinghausen (DE); Hesberg, Ulrich, Dr., 30916 Isernhagen (DE)
(74) Vertreter: Schneider, Egon

(56) Entgegenhaltungen:
- US-A- 5 671 907

## Beschreibung

Die Erfindung betrifft eine Luftfeder mit einem elastomeren Luftfederbalg, der unter Bildung eines abgeschlossenen, druckbeaufschlagbaren Luftfedervolumens mit seinen beiden, je einen konischen oder verspannbaren Dichtwulst aufweisenden Enden an je einem Anschlußbauteil dicht befestigt ist, siehe US-A-5 671 907.

Luftfedern mit einem Balg aus elastomerem Werkstoff bewähren sich seit Jahrzehnten als lastregelbare Federelemente im Fahrzeugbau und im industriellen Bereich. Die Luftfederbälge sind an den beiden offenen Enden mittels Anschlußbauteilen abgedichtet und über diese beispielsweise an Straßenkraftfahrzeugen zwischen Karosserie und Achse befestigt.

Grundsätzlich unterscheidet man die Luftfederbälge nach Rollbälgen und Faltenbälgen.

Bei den Rollbälgen ist üblicherweise eines der beiden Anschlußbauteile als sogenannter Abrollkolben ausgebildet, auf dem die sich im Betrieb ausbildende Rollfalte des Rollbalges ablaufen kann.

Um einen dichten Sitz der Enden des Luftfederbalges an den Anschlußbauteilen zu erreichen, sind verschiedene abdichtende Anschlußarten bekannt. Die Balgenden sind entweder mit konische Dichtflächen aufweisenden Dichtwülsten oder über verspannbare Dichtwülste an den Anschlußbauteilen befestigbar. Für Rollbälge wird häufig das der Rollfalte gegenüberliegende Balgende mit einem verspannbaren Dichtwulst ausgestattet, der mittels Bördeln mit der das Anschlußbauteil darstellenden Bördelplatte verbunden ist, während das auf dem Abrollkolben dicht aufsitzende Balgende als konischer Dichtsitz ausgebildet ist.

Luftfederbälge mit verspannbaren Dichtwülsten sind entweder fest an einem als Bördelplatte ausgebildeten Anschlußbauteil oder mittels eines umlaufenden Befestigungsteil an dem Anschlußbauteil verschraubt. Durch das Umbördeln des Plattenrandes um den verspannbaren Dichtwulst wird eine formschlüssige und dichtende Verbindung zwischen beiden Teilen hergestellt.

Durch Setzerscheinungen des Gummis wird die Dichtheit der formschlüssigen Verbindung zwischen Balgende und Anschlußbauteil auf Dauer nicht immer ausreichend sein. Auch können Materialschwankungen und Toleranzen der Bauteile eine Herstellung eines gleichmäßigen Klemmspaltes bei der Bördelung verhindern. Die Gummischicht, die die Dichtfläche in dem Klemmspalt bildet, ist häufig so dünn, dass Spaltunregelmäßigkeiten nicht immer sicher ausgeglichen werden können. Im schlimmsten Fall kann es dadurch zu Undichtigkeit kommen, die erhebliche Nacharbeit erfordert.

Der Erfindung liegt die Aufgabe zugrunde, eine Luftfeder der eingangs beschriebenen Art zu schaffen, bei der eine sichere und standfestere Abdichtung zwischen dem jeweiligen Balgende und dem Anschlußbauteil ermöglicht wird.

Die Aufgabe wird durch folgende Merkmale gelöst:
- an der Stirnseite mindestens eines Balgendes ist eine auf dem kleinsten Balgdurchmesser liegende, über die Stirnfläche des Balgendes hinausragende, elastische, umlaufende Dichtlippe angeformt,
- die Dichtlippe ist im zusammengebauten Zustand der Luftfeder dem Druckraum (Luftfedervolumen) zugewandt,
- die Dichtlippe liegt unter Einwirkung ihrer Eigenspannung dichtend am Anschlußbauteil an.

Die umlaufende Dichtlippe liegt am Innenumfang des jeweiligen Balgendes. Sie ragt über die Stirnfläche des Balgendes hinaus, so daß sie bei dem Aufdrücken auf den Dichtsitz oder auf das Anschlußbauteil aufgrund der elastischen Ausbildung seitlich in Richtung Stirnflächenebene wegklappt und aufgrund Ihrer Eigenspannung gegen diese Klapprichtung sich gegen das Anschlußbauteil anpreßt. Dadurch wird eine Dichtwirkung direkt zum Druckraum, dem Luftfedervolumen, erzielt. Diese Dichtlippenanordnung liegt noch vor dem Hauptsitz der Verspannung des Dichtwulstes und hat lediglich die Funktion des Dichtens. Die Funktion des Haltens wird weiter von dem Dichtwulst übernommen, so dass eine sichere Trennung der beiden Funktionen gewährleistet ist.

Weitere vorteilhafte Ausgestaltungen der Erfindung werden in den Unteransprüchen gekennzeichnet. Die Ausgestaltung gemäß Unteranspruch 2 zeichnet sich durch eine gute Ausformbarkeit aus und hat einen vergrößerten elastischen Anteil an der Dichtfläche. Die Ausgestaltung gemäß Unteranspruch 3 kennzeichnet eine Dichtlippe, die sich besonders leicht an das Anschlußbauteil anschmiegt. Die Ausgestaltungen nach den Unteransprüchen 4 und 5 lassen sich besonders gut ausformen und haben einen erhöhten elastischen Anteil an der Dichtfläche.

Anhand der Zeichnung werden nachstehend vier Ausführungsbeispiele der Erfindung näher erläutert. Es zeigen
- Fig. 1: einen als Rollbalg ausgebildeten Luftfederbalg im Herstellzustand,
- Fig. 2: eine zusammengebaute Luftfeder mit dem in Fig. 1 gezeigten Rollbalg,
- Fig. 3: eine Bördelverbindung gemäß des bekannten Standes der Technik zwischen einem verspannbaren Dichtwulst eines Rollbalgendes und einem als Bördelplatte ausgebildeten Anschlußbauteil,
- Fig. 4: eine Bördelverbindung zwischen einem Rollbalg mit endseitiger Dichtlippe gemäß dieser Erfindung,
- Fig. 5 bis 8: verschiedene geometrische Ausbildungsformen der endseitigen Dichtlippe eines Luftfederbalges gemäß der Erfindung,
- Fig. 9: eine zusammengebaute Luftfeder mit einem Luftfederbalg mit konischen Dichtwülsten,
- Fig. 10: den Luftfederbalg gemäß Fig. 9 im Herstellzustand,
- Fig. 11: einen Rollbalg wie in Fig. 10 mit zusätzlichen endseitigen Dichtlippen gemäß dieser Erfindung,
- Fig. 12: den oberen konischen Dichtsitz des in Fig. 11 gezeigten, eingebauten Rollbalges,
- Fig. 13: den unteren Dichtsitz des in Fig. 11 gezeigten, eingebauten Rollbalges

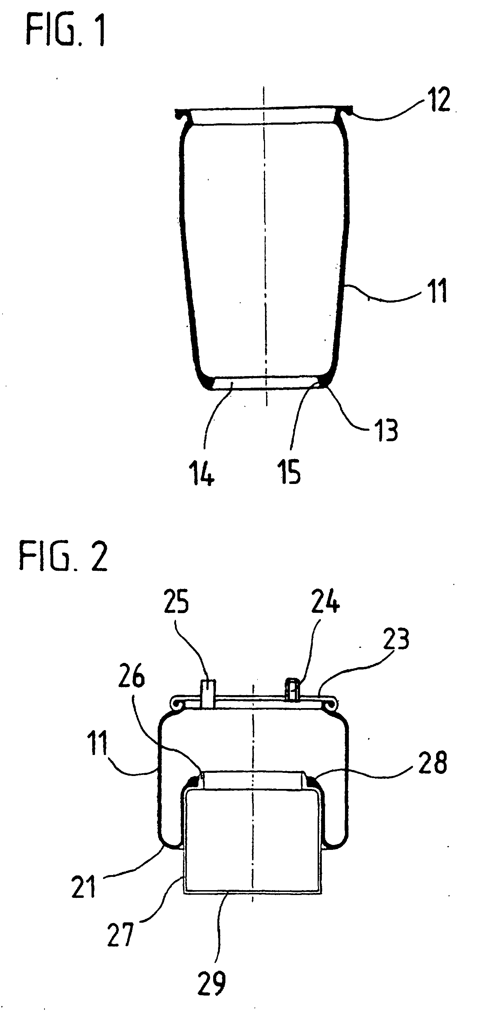

In Fig. 1 wird ein nach unten sich konisch verjüngender, einen Rollbalg darstellender Luftfederbalg 11 gemäß des bekannten Standes der Technik im schematischen Längsschnitt gezeigt. Dieser Rollbalg 11 besteht aus Gummi oder gummiähnlichen Kunststoffen mit Verstärkungseinlagen und stellt einen beiderseits in Dichtwülste 12 und 13 auslaufenden Schlauchkörper dar. Der obere Dichtwulst 12 ragt umfangsmäßig über den Balgumfang hinaus und bildet einen verspannbaren Dichtwulst aufgrund seiner Hinterschneidung.

Die untere balgseitige Öffnung 14 wird von einem integrierten, eine konische Dichtfläche 15 bildenden Dichtwulst 13 umfaßt.

In der Fig. 2 wird eine Luftfeder in zusammengebautem Zustand gezeigt, in dem der Rollbalg 11 eine Rollfalte 21 ausbildet. Der obere Dichtwulst 12 des Rollbalges 11 ist an einer Bördelplatte 23 befestigt. Die Bördelplatte 23 ist über Schrauben 24 an einem Fahrzeugrahmen anschraubbar. Die Bördelplatte 23 weist einen Luftanschluß 25 auf, über den der Rollbalg 11 mit einer hier nicht dargestellten Druckluftquelle verbindbar ist.

Der Rollbalg 11 ist mit seiner unteren Balgöffnung 14, die von dem konischen Dichtwulst 13 begrenzt wird, auf einem konischen Dichtsitz 26 eines Abrollkolbens 27, der aus einem Blechmantel gebildet ist, befestigt. Der konische Dichtsitz 26 ist im Durchmesser kleiner als der Abrollkolben 27 und liegt auf seiner oberen Stirnseite 28. Der Abrollkolben 27 ist durch einen Boden 29 luftdicht abgeschlossen. Über nicht dargestellte Gewindeansätze wird der Abrollkolben 27 an einer hier nicht dargestellten Fahrzeugachse befestigt.

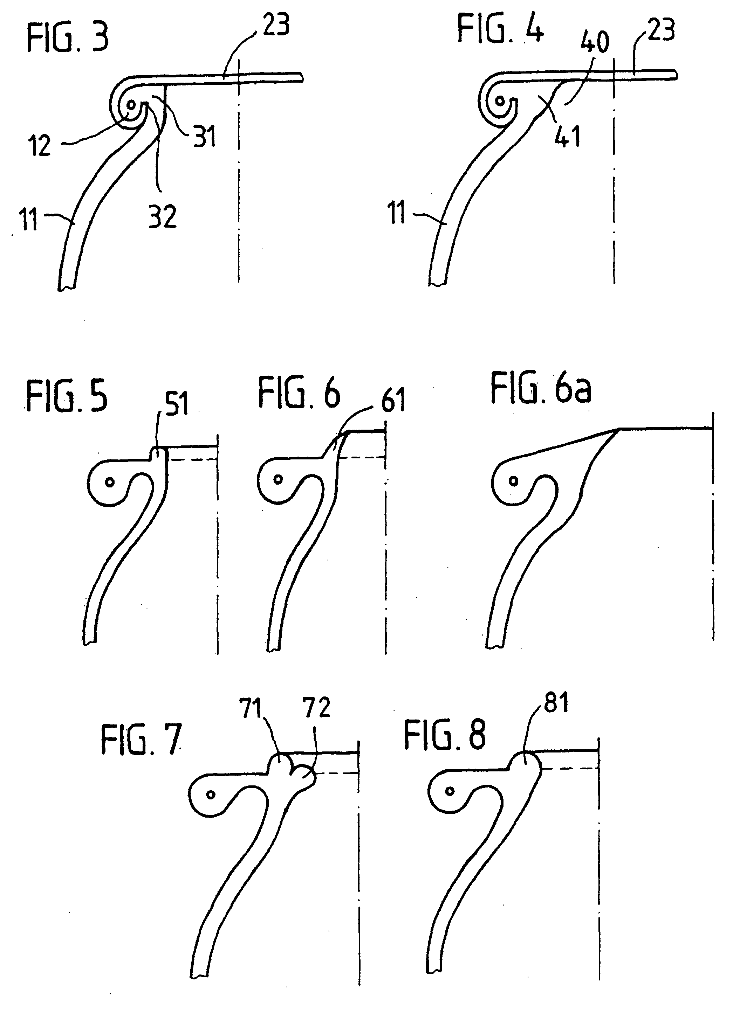

Aus der Fig. 3 wird in vergrößerter Detaildarstellung ersichtlich, daß das Anschlußbauteil 23 mit dem verspannbaren Dichtwulst 12 durch Umbördeln des Plattenrandes dicht verspannt ist. Dadurch wird eine formschlüssige und dichtende Verbindung hergestellt. Der Klemmspalt 31 zwischen dem nach oben gebogenen Rand 32 der Bördelplatte 23 und dieser Bördelplatte 23 sorgt für ein formschlüssiges Halten und dichtes Verbinden der beiden Bauteile. Aufgrund von Fertigungstoleranzen der Bauteile ist es aber nicht auszuschließen, daß der Klemmspalt 31 über seinen Umfang mit unterschiedlicher Weite verläuft.

In Fig. 4 wird die gleiche Bördelverbindung an einem Balgende gezeigt, das eine die Balgöffnung 40 direkt umschließende Dichtlippe 41 aufweist. Diese Dichtlippe 41 ist aufgrund der Bördelung in Richtung Balgöffnung 40 zwangsweise umgeklappt und liegt aufgrund ihrer Eigenspannung dichtend an der Bördelplatte 23 an.

In der Fig. 5 wird eine Ausbildungsform der über die stirnseitige Fläche des Balgendes hinausstehende Dichtlippe 51 gezeigt. Die Dichtlippe 51 hat die geometrische Form eines schmalen Rechteckes. In Fig. 6 ist die Dichtlippe 61 sich zu ihrem Ende hin verjüngend und nach innen zur Balgöffnung hin geschwungen ausgebildet. In Fig. 6a ist die Dichtlippe so ausgeformt, daß sie nicht nur in den Druckraum hineinragt, sondern auch die Dichtfläche zu einer Keilform ausgebildet ist Dies erhöht den Anteil an elastischem Material, das zu Dichtzwecken zur Verfügung steht. Bei Aufbringen der horizontalen Bördelplatte bzw. dem Anschlußbauteil wird die keilförmige Dichtlippe nach unten gepreßt.

Die Ausbildung gemäß Fig. 7 zeigt die Dichtlippe 71 als zweiteiligen Dichtkörper aufgrund einer Einschlitzung 72. In Fig. 8 ist die Dichtlippe 81 mit einer halbrunden Ausführung zu sehen.

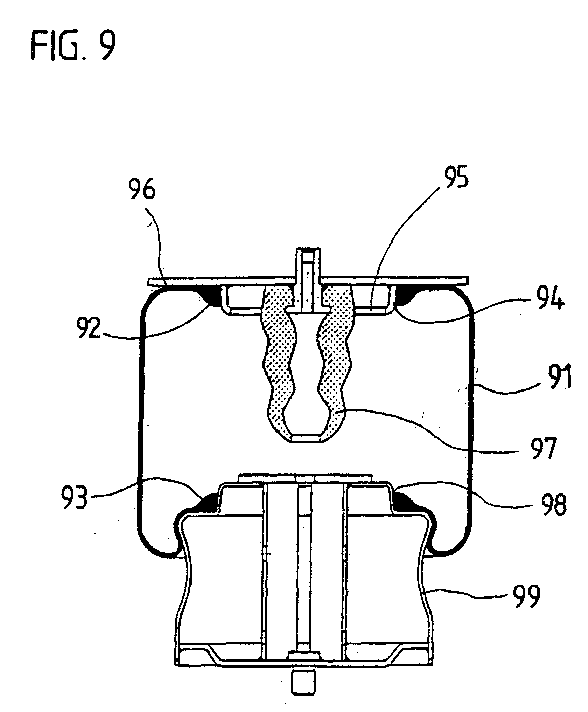

In der Fig. 9 wird eine Luftfeder in zusammengebautem Zustand gezeigt, die einen Rollbalg 91 aufweist, der an beiden Enden mit je einem einen konischen Dichtsitz aufweisenden Dichtwulst 92, 93 versehen ist. Der obere konische Dichtwulst 92 liegt auf einem eine konische Dichtfläche 94 aufweisenden zentrischen Ansatz 95 einer Befestigungsplatte 96 an, an der ein nach innen ragender elastischer Puffer 97 angebracht ist. Der Rollbalg 91 ist mit seiner unteren Balgöffnung, die von dem konischen Dichtwulst 93 begrenzt wird, auf einem konischen Dichtsitz 98 eines Abrollkolbens 99 aufgespannt.

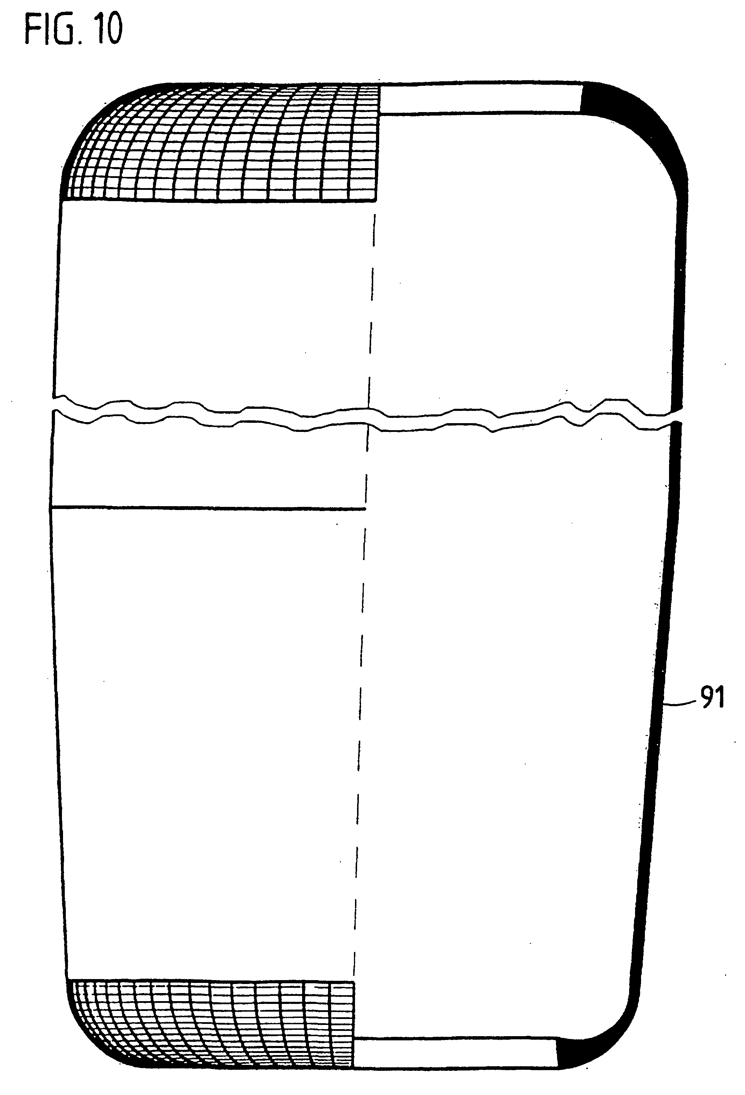

In Fig. 10 wird der aus dem Stand der Technik bekannte Rollbalg 91 der Luftfeder aus Fig. 9 im Herstellzustand im schematischen Schnitt gezeigt.

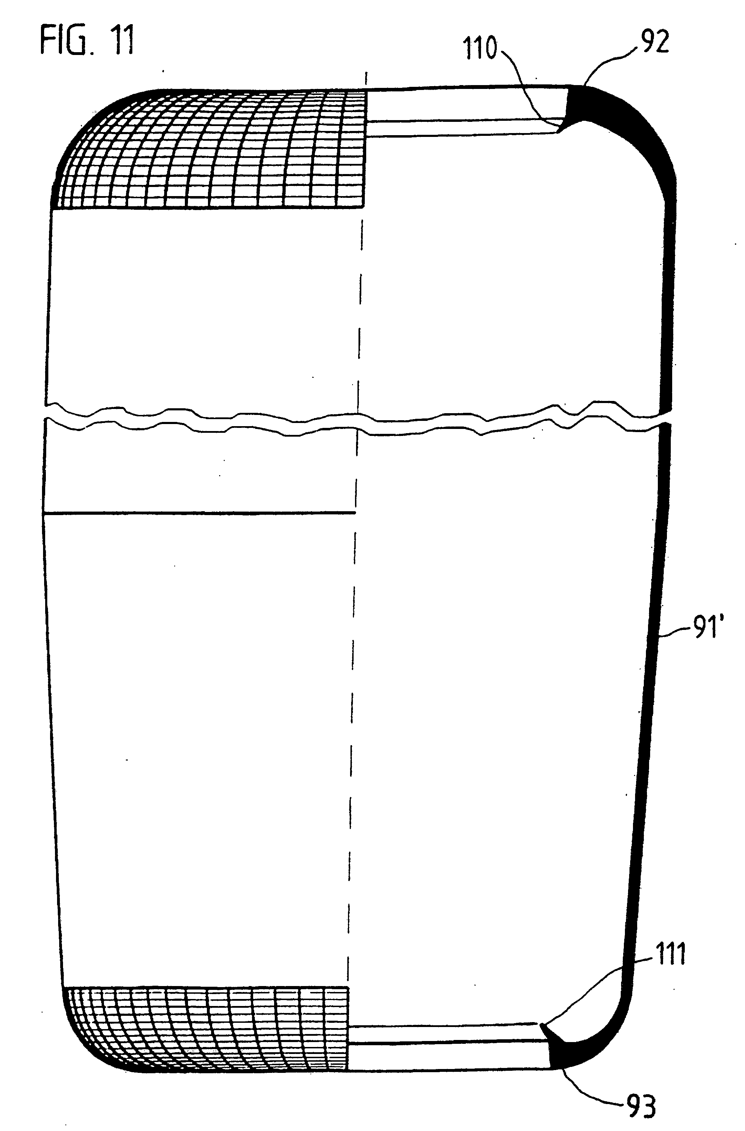

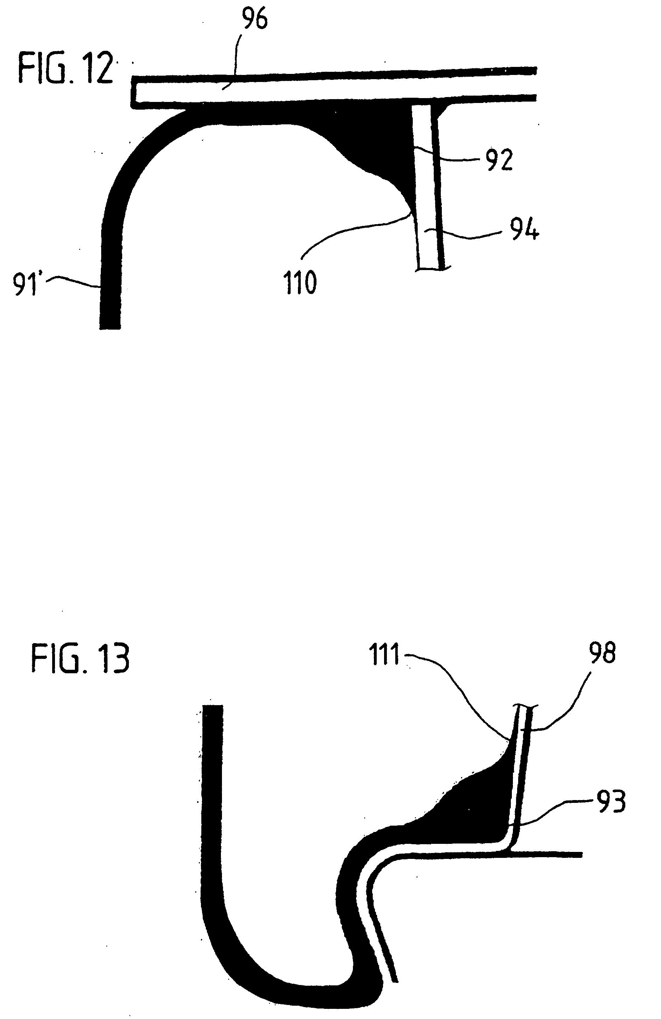

In der Fig. 11 wird dei Rollbalg 91' gemäß Fig. 10 in erfindungsgemäßer Weise modifiziert dargestellt und weist im Unterschied zu dem bekannten Stand der Technik an beiden Dichtwülsten 92, 93 je eine die Balgöffnung umschließende umlaufende Dichtlippe 110, 111 auf. Diese Dichtlippen 110, 111 legen sich im eingebauten Zustand gegen die konische Dichtfläche 94 bzw. 98 des jeweiligen konischen Dichtsitzes an wie in den Figuren 12 und 13 dargestellt ist.

## Patentansprüche

1. Luftfeder mit einem elastomeren Luftfederbalg, der unter Bildung eines abgeschlossenen, druckbeaufschlagbaren Luftfedervolumens mit seinen beiden, je einen konischen oder verspannbaren Dichtwulst aufweisenden Enden an je einem Anschlußbauteil dicht befestigt ist,
**gekennzeichnet durch folgende Merkmale:**
- an der Stirnseite mindestens eines Balgendes ist eine auf dem kleinsten Balgdurchmesser liegende, über die Stirnfläche des Balgendes hinausragende, elastische, umlaufende Dichtlippe (41; 51; 61; 71; 81) angeformt,
- die Dichtlippe ist im zusammengebauten Zustand der Luftfeder dem Druckraum, d.h. dem Luftfedervolumen, zugewandt,
- die Dichtlippe liegt unter Einwirkung ihrer Eigenspannung dichtend am Anschlußbauteil (23) an.

2. Luftfeder nach Anspruch 1, **dadurch gekennzeichnet,**
**daß** die Dichtlippe (51) rechteckförmig ausgebildet ist.

3. Luftfeder nach Anspruch 1, **dadurch gekennzeichnet,**
**daß** die Dichtlippe (61) sich zum Ende hin verjüngend und zum Balginneren geneigt ausgebildet ist.

4. Luftfeder nach Anspruch 1, **dadurch gekennzeichnet,**
**daß** die Dichtlippe (71) eine Einschlitzung (72) aufweist.

5. Luftfeder nach Anspruch 1, **dadurch gekennzeichnet,**
**daß** die Dichtlippe (81) halbrund ausgebildet ist.

## Claims

1. Air spring having an elastomeric air spring bellows, which is tightly attached at each of its two ends, each of which have a conical or deformable sealing bead, to a respective attachment component, forming a closed-off air spring volume to which pressure can be applied,
**characterised by** the following features:
- integrally formed on the end face of at least one end of the bellows is a resilient circumferential sealing lip (41;51;61;71;81), which lies on the smallest bellows diameter and protrudes beyond the end face of the end of the bellows,
- the sealing lip faces the pressurised space, i.e. the air spring volume, in the assembled state of the air spring,
- the sealing lip abuts in a sealing manner against the attachment component (23) due to the action of the inherent stress of said lip.

2. Air spring according to claim 1, **characterised in that** the sealing lip (51) is configured rectangular.

3. Air spring according to claim 1, **characterised in that** the sealing lip (61) is configured to taper towards the end and to be inclined towards the interior of the bellows.

4. Air spring according to claim 1, **characterised in that** the sealing lip (71) has a slit (72).

5. Air spring according to claim 1, **characterised in that** the sealing lip (81) is configured semi-circular.

## Revendications

1. Ressort pneumatique comprenant un soufflet en élastomère qui, en formant un volume de ressort pneumatique fermé et sollicité par la pression, par ses deux extrémités présentant à chaque fois un bourrelet d'étanchéité conique ou déformable, est fixé de façon étanche à chaque fois sur une pièce de raccordement,
**caractérisé par** les caractéristiques suivantes :
- sur le côté frontal d'au moins une extrémité du soufflet est formée une lèvre d'étanchéité (41 ; 51 ; 61 ; 71 ; 81) circulaire, élastique, dépassant de la surface frontale de l'extrémité du soufflet et se trouvant sur le plus petit diamètre du soufflet,
- la lèvre d'étanchéité, une fois que le ressort pneumatique a été assemblé, est tournée vers l'espace sous pression, c'est-à-dire vers le volume du ressort pneumatique,
- la lèvre d'étanchéité, sous l'effet de sa propre contrainte, est en appui de façon étanche sur la pièce de raccordement (23).

2. Ressort pneumatique selon la revendication 1, **caractérisé en ce que** la lèvre d'étanchéité (51) est configurée en ayant une forme rectangulaire.

3. Ressort pneumatique selon la revendication 1, **caractérisé en ce que** la lèvre d'étanchéité (61) est configurée en se rétrécissant vers l'extrémité et en étant inclinée vers l'intérieur du soufflet.

4. Ressort pneumatique selon la revendication 1, **caractérisé en ce que** la lèvre d'étanchéité (71) présente une entaille (72).

5. Ressort pneumatique selon la revendication 1, **caractérisé en ce que** la lèvre d'étanchéité (81) est configurée en ayant une forme demi-ronde.
